# EUROPÄISCHE PATENTSCHRIFT

(11) **EP 1 199 419 B1**
(45) Veröffentlichungstag und Bekanntmachung des Hinweises auf die Patenterteilung: **08.02.2006**
(21) Anmeldenummer: 01124832.5
(22) Anmeldetag: 18.10.2001
(51) Int. Cl.: E04B 2/96

(54) **Verbindungsvorrichtung zwischen einem Pfostenprofil und einem Riegelprofil für eine Bauwerksfassade**
Connection between a transom and a mullion of a building facade
Dispositif de liaison d'un poteau et d'une traverse d'une façade de bâtiment

(30) Priorität: 19.10.2000 DE 10051845
(43) Veröffentlichungstag der Anmeldung: 24.04.2002
(73) Patentinhaber: W. HARTMANN & CO (GMBH & CO), D-20459 Hamburg (DE)
(72) Erfinder: Fischer, Roland, Dipl.-Ing., 90562 Heroldsberg (DE); Holweg, Thomas, 91207 Lauf-Wetzendorf (DE); Höfler, Andreas, 90459 Nürnberg (DE); Heider, Siegfried, 90556 Cadolzburg (DE)
(74) Vertreter: Tergau & Pohl Patentanwälte

(56) Entgegenhaltungen:
- DE-A- 3 809 951
- DE-A- 19 901 775
- DE-C- 3 808 587
- DE-U- 29 910 027
- GB-A- 2 134 205

## Beschreibung

Die Erfindung bezieht sich auf eine Verbindungsvorrichtung zwischen einem Pfostenprofil und einem Riegelprofil für eine Bauwerksfassade mit einem Lagerauge am Pfostenprofil und mit einem im Montageendzustand das Lagerauge durchgreifenden Lagerschaft am Riegelprofil.

Die Profile werden im Fassadenbau eingesetzt, wobei als Pfosten die vertikalen Profile und als Riegel die zwischen den Pfosten in der Regel horizontal verlaufenden Profile bezeichnet werden. Die Profile werden in der Regel an ihrer Fassadenvorderseite aneinander beispielsweise über eine Schraubverbindung befestigt. Zusätzlich ist üblicherweise eine weitere Verbindungsvorrichtung im von der Fassadenvorderseite abgewandten rückwärtigen Bereich der Profile vorgesehen. Diese Verbindungsvorrichtung soll ein Auseinanderklaffen der beiden Profile verhindern, indem die Profile auch im rückwärtigen Bereich fest aneinander gehalten werden. Dies ist insbesondere als Transportsicherung beim Transport von vorgefertigten Modulen vorteilhaft. Die Verbindungsvorrichtung wirkt weiterhin als Verdrehschutz, um ein Verdrehen des Riegelprofils gegenüber dem Pfostenprofil zu verhindern.

Eine solche Verbindungsvorrichtung ist beispielsweise bekannt aus der DE 199 01 775 A1. Hierbei ist ein Verbinder vorgesehen, der in einer Innenkammer des Riegelprofils stimseitig mit einem Formkörper auf einem Schraubkanal befestigt ist. Der Verbinder weist dabei einen Bolzen mit einer Rastausnehmung auf. Bei der Montage des Riegelprofils am zugeordneten Pfostenprofil wird zunächst der Bolzen durch das am Pfostenprofil vorgesehene Lagerauge geführt, und anschließend wird das Riegelprofil gegenüber dem Pfostenprofil derart verschoben, dass die Rastausnehmung das Lagerauge umgreift. Aufgrund der im Bolzen eingebrachten Rastausnehmung weist der Bolzen eine komplexe Geometrie auf. Zudem stützt sich die Rastausnehmung nur in einem begrenzten Bereich am Lagerauge ab, so dass eine hohe lokale Belastung auftritt.

Aus der DE 38 08 587 C1 ist zur nachträglichen Montage eines Riegelprofils an einem Pfostenprofil ein Verbinder vorgesehen, welcher mit einem Bolzen und einer darauf angebrachten Gleitbuchse in eine korrespondierende Bohrung am Pfostenprofil geschoben wird. Über einen Fixierstift wird verhindert, dass der Bolzen wieder aus der Bohrung herausgleitet.

Der Erfindung liegt die Aufgabe zugrunde, eine konstruktiv einfach ausgebildete Verbindungsvorrichtung anzugeben.

Die Aufgabe wird gemäß der Erfindung gelöst durch eine Verbindungsvorrichtung zwischen einem Pfostenprofil und einem Riegelprofil, insbesondere für eine Bauwerksfassade, mit einem Lagerauge am Pfostenprofil und mit einem Lagerschaft am Riegelprofil, welcher im Montageendzustand das Lagerauge durchgreift, wobei am Freiende des Lagerschafts ein flanschartiger Kragen zum Hintergreifen des Lagerauges sowie eine im Montageendzustand im Lagerauge einliegende und am Lagerschaft querverschieblich gelagerte Führungshülse vorgesehen ist.

Bei der Montage wird der Kragen durch das Lagerauge axial durchgeführt und die Führungshülse in das Lagerauge eingeführt. Anschließend wird der Lagerschaft mit dem Kragen quer zur Axialrichtung, also quer zu der im Lagerauge gehaltenen Führungshülse verschoben. Durch diese Querverschiebung hintergreift der Kragen das Lagerauge, so dass die beiden Profile zusammengehalten sind und ein Auseinanderklaffen vermieden ist. Zusätzlich wirkt die Verbindungsvorrichtung als Verdrehschutz. Von der im Lagerauge einliegenden Führungshülse werden beispielsweise auftretende Scherkräfte aufgenommen und damit wird der Lagerschaft in vorteilhafter Weise entlastet.

Durch die lose, also nicht starre Verbindung zwischen dem Lagerschaft und der Führungshülse ist eine konstruktiv einfache Ausgestaltung der Verbindungsvorrichtung ermöglicht. Insbesondere ist am Lagerschaft selbst keine aufwendige Ausnehmung erforderlich. Der Lagerschaft kann vielmehr als einfacher zylindrischer Bolzen ausgeführt sein.

Vorzugsweise weisen der Kragen und die Führungshülse den gleichen Außendurchmesser auf, so dass ein einfaches Einführen der Führungshülse in das Lagerauge und ein guter Sitz der Führungshülse im Lagerauge ermöglicht ist. Um ein einfaches Durchführen des Kragens durch das Lagerauge zu ermöglichen, hat der Kragen vorzugsweise einen kleineren Außendurchmesser als die Führungshülse.

Bevorzugt ist dabei im Montageendzustand die Führungshülse passgenau im Lagerauge angeordnet. Die Führungshülse sitzt also nahezu - bis auf geringe Toleranzen, um ein Einführen in das Lagerauge zu ermöglichen - ohne Spiel formschlüssig im Lagerauge. Dadurch werden Kräfte, beispielsweise aufgrund eines Drehmoments des Riegelprofils, auf die Hülse übertragen. Ohne Führungshülse würden diese Kräfte unmittelbar zu einer Scherbeanspruchung des Lagerschafts führen. Durch den passgenauen Sitz der Führungshülse im Lagerauge werden daher die aufzunehmenden Kräfte zu einem Großteil über die Führungshülse abgeleitet, so dass die Belastung des Lagerschafts vergleichsweise gering ist.

In einer bevorzugten Ausführung weist der Lagerschaft einen sich an den Kragen anschließenden und insbesondere umlaufenden Positionierbund mit geringerem Außendurchmesser als der Kragen auf. Auf diesen Positionierbund ist die Führungshülse aufschiebbar, und wirkt dabei als Führungshilfe für die Führungshülse bei der Montage.

In einer besonders vorteilhaften Ausbildung ist am Riegelprofil ein Befestigungselement angeordnet, an dem die Führungshülse im Montageendzustand abgestützt ist. Die Führungshülse steht also im Montageendzustand in Wirkverbindung mit dem Riegelprofil. Insbesondere reicht hierzu die Führungshülse in die Innenkammer des Riegelprofils hinein und schließt nicht planparallel mit dem Lagerauge ab. Vorzugsweise bilden die Führungshülse und das Befestigungselement einen Formschluss. Das Abstützen der Führungshülse hat den entscheidenden Vorteil, dass im Verbindungsbereich auftretende Quer- oder Scherkräfte zwischen den beiden Profilen nahezu vollständig von der Führungshülse aufgenommen werden. Die zwischen den beiden Profilen wirkende Scherkräfte werden also über die Führungshülse von dem einen Profil in das andere Profil eingeleitet. Dadurch wirken auf den Lagerschaft keine oder nahezu keine Scherkräfte.

Gemäß einer vorteilhaften Ausgestaltung ist eine Schraube vorgesehen, deren Schraubenkopf als Kragen dient. Der Kragen ist allgemein gesehen insbesondere als scheiben- oder zylinderförmiges Element und speziell als Schraubenkopf ausgebildet. Die Ausgestaltung als Schraube hat den wesentlichen Vorteil, dass die Verbindungsvorrichtung sehr einfach ausgestaltet ist. Weitere Verbindungselemente neben der Schraube und der Führungshülse sind nicht notwendig.

Zweckdienlicherweise ist die Schraube in das am Riegelprofil angeordnete Befestigungselement eingeschraubt. Das Befestigungselement ist insbesondere einstückig mit dem Riegelprofil, beispielsweise als Schraubkanal, ausgebildet. Die Schraube wird also unmittelbar am Riegelprofil ohne Zwischenschaltung eines weiteren Verbindungselements befestigt.

Vorzugsweise weist das Befestigungselement zumindest ein Schraubauge zur Befestigung der Schraube auf. Unter Schraubauge wird hier ein allseitig von einer Wandung umgebenes Kernloch verstanden, in das ein Gewinde eingebracht werden kann. Bei mehreren Schraubaugen kann die Trennwand zwischen benachbarten Schraubaugen auch entfallen, so dass diese - im Querschnitt gesehen - nach Art einer liegenden Acht angeordnet sind. Durch die Anordnung von mehreren Schraubaugen ist das Riegelprofil für mehrere Befestigungsvarianten vorbereitet und somit für unterschiedliche Anwendungszwecke ausgebildet.

Gemäß einer zweckdienlichen Weiterbildung ist an der dem Kragen abgewandten Stirnseite der Führungshülse ein erstes Führungselement und am Befestigungselement ein hierzu korrespondierendes zweites Führungselement vorgesehen, die derart miteinander wirken, dass die Führungshülse in einer Radialrichtung zum Lagerschaft insbesondere linear verschieblich und verdrehsicher geführt ist. Dadurch werden die Bewegungsfreiheitsgrade der Führungshülse eingeschränkt.

Dies erleichtert die Montage, da eine bündige Ausrichtung der Führungshülse mit dem Kragen erleichtert ist.

Zusätzlich ist in einer bevorzugten Ausgestaltung die Führungshülse bis zu einem Anschlag in Radialrichtung zum Lagerschaft verschieblich gelagert, wobei die Führungshülse in der Anschlagposition konzentrisch zum Lagerschaft und insbesondere bündig mit dem Kragen angeordnet ist. Dieser Anschlag ist dabei vorzugsweise am ersten oder zweiten Führungselement vorgesehen. Über die Führungselemente wird daher zunächst eine seitliche Führung der Führungshülse gewährleistet und über den Anschlag wird ihre Verschieblichkeit begrenzt. Damit ist in der Anschlagposition die Position der Führungshülse relativ zum Lagerschaft und damit relativ zum Kragen festgelegt. In dieser mit dem Kragen bündigen Position ist das Durchführen des Kragens durch und das Einführen der Führungshülse in das Lagerauge problemlos möglich.

Zweckdienlicherweise ist dabei das erste Führungselement nach Art einer Nut, das zweite nach Art eines Stegs und der Anschlag ist durch eine Begrenzung der Nut ausgebildet.

Um ein automatisches Ausrichten der Führungshülse in die Anschlagposition zu gewährleisten ist zur Verschiebung des Führungselements an der dem Kragen zugewandten Stirnseite ein Mitnahmeelement vorgesehen, das mit dem Kragen zumindest bei der Montage in Wirkverbindung steht. Dadurch wird in Folge einer Drehbewegung des Kragens, beispielsweise beim Einschrauben der Schraube in das Befestigungselement, die Führungshülse automatisch entlang den Führungselementen linear bis in die Anschlagposition verschoben. Das Mitnahmeelement ist dabei insbesondere als Mitnahmestift oder Mitnahmespitze ausgebildet. Durch das Befestigen der Schraube wird der Schraubenkopf mit seiner Unterseite gegen diese Mitnahmespitze gepresst, so dass durch die dadurch bedingte Reibkraft die Bewegung des Schraubenkopfes auf die Führungshülse übertragen wird. Gleichzeitig wird aufgrund dieser Reibkraft die Führungshülse in der Anschlagposition gehalten. Die aufgrund dieser Reibverbindung ausgeübten Haltekräfte sind jedoch ausreichend klein, um ein Verschieben der Führungshülse aus der Anschlagposition heraus entlang den Führungselementen zu ermöglichen. Der Lagerschaft lässt sich also relativ zur Führungshülse quer verschieben, so dass die Ausbildung des Hintergriffs zwischen dem Kragen und dem Lagerauge nicht behindert ist.

Ein Ausführungsbeispiel der Erfindung wird im Folgenden anhand der Zeichnung näher erläutert. Es zeigen in schematischen Darstellungen:
- Fig. 1: einen Ausschnitt aus einem Profilgerüst aus zusammengebauten Pfostenprofilen und Riegelprofilen,
- Fig. 2: eine vergrößerte Darstellung im Verbindungsbereich zwischen einem Pfostenprofil und einem Riegelprofil in einer Blickrichtung entlang der Längsrichtung des Pfostenprofils,
- Fig. 3: eine Stimansicht des Riegelprofils im Verbindungsbereich,
- Fig. 4: eine perspektivische Darstellung eines Riegelprofils mit einer Schraube und einer Führungshülse in einer Explosionsdarstellung,
- Fig. 5: ein Pfostenprofil mit mit zwei beidseitig angeordneten Riegelprofilen in einer Vormontagestellung in perspektivischer Darstellung,
- Fig. 6: das Pfostenprofil und die Riegelprofile gemäß Fig. 5 im Montageendzustand in perspektivischer Darstellung,
- Fig. 7: eine Schraube in einer Seitenansicht,
- Fig. 8: eine Führungshülse in einer Aufsicht
- Fig. 9: eine Führungshülse in einer Seitenansicht, und
- Fig. 10A, 10B: jeweils eine Schraube und eine Führungshülse in einer perspektivischen Ansicht einer Explosionsdarstellung.

In den Figuren sind gleich wirkende Teile mit den gleichen Bezugszeichen versehen.

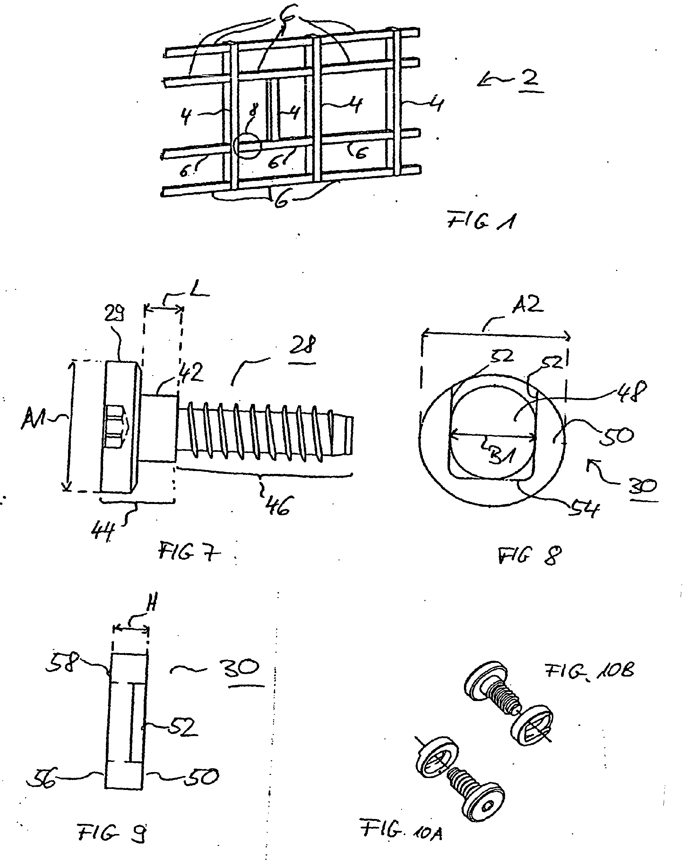

Ein Profilgerüst 2 gemäß Fig. 1 umfasst senkrecht verlaufende Pfostenprofile 4, zwischen denen waagrecht verlaufende Riegelprofile 6 angeordnet sind. Ein derartiges Profilgerüst 2 dient zum Aufbau einer Bauwerksfassade, wobei an die Fassadenvorderseite am Profilgerüst 2 flächige Ausfachungselemente, wie beispielsweise Glasscheiben, montierbar sind. Ein wesentlicher Punkt ist die planparallele Ausrichtung der Pfostenprofile 4 und der Riegelprofile 6 zueinander, um eine durchgehend ebene Anlagefläche für die Ausfachungselemente zu bilden und um eine Belastung der Ausfachungselemente durch hervorstehende Kanten zu vermeiden. Die Profile 4,6 müssen daher gegeneinander u.a. verdrehsicher angeordnet sein.

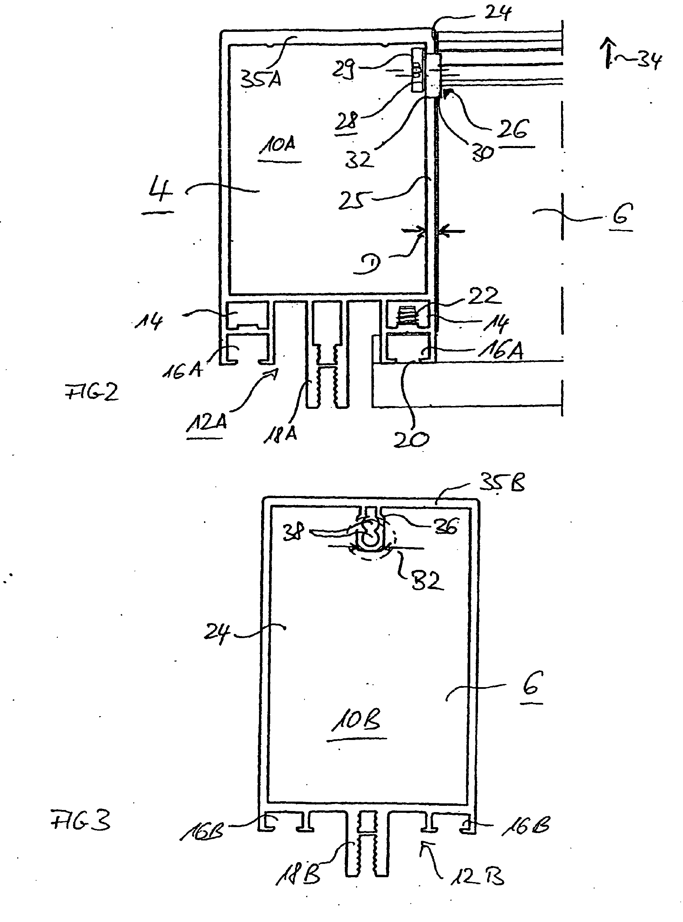

Die Verbindung zwischen Pfostenprofil 4 und Riegelprofil 6 in einem Verbindungsbereich 8, wie er in Fig. 1 durch einen Kreis angedeutet ist, wird zunächst anhand der Figuren 2 bis 6 näher erläutert. Hieraus, insbesondere aus Fig. 2, ist zu entnehmen, dass das Pfostenprofil 4 im Querschnitt gesehen rechteckförmig ausgebildet ist und einen Hohlraum 10A umschließt. An einer Fassadenvorderseite 12A ist seitlich jeweils ein doppelreihig ausgeführter, profilierter Steg angeordnet, der eine rückwärtige Schraubkammer 14 und eine zur Fassadenvorderseite 12A gerichtete Dichtungsaufnahmenut 16A umfasst. An der Fassadenvorderseite 12A ist darüber hinaus mittig ein Schraubkanal 18A angeordnet.

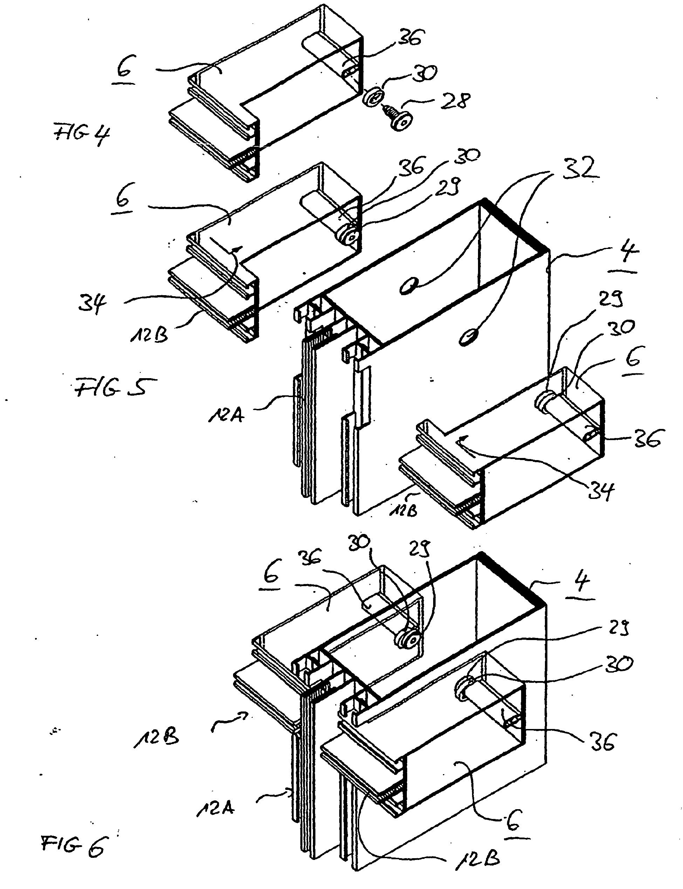

Zur Befestigung des Riegelprofils 6 am Pfostenprofil 4 weist das Riegelprofil 6 in der Regel einen Überstand 20 auf, der das Pfostenprofil 4 im Bereich einer Aussparung in der Dichtungsaufnahmenut 16A überlappt (vgl. Fig. 5 und Fig. 6). Die beiden Profile 4,6 werden also miteinander verklinkt. Die Aussparung und der Überstand 20 werden durch spanende Bearbeitung der Profile 4,6 erzeugt. Der Überstand 20 wird an der Schraubkammer 14 über eine Schraubverbindung 22 (Fig. 2) befestigt. Im Montageendzustand liegt das Riegelprofil 6 mit seiner Stirnseite 24 an einer Seitenwand 25 des Pfostenprofils 4 an.

Zur Verdrehsicherung und um die beiden Profile 4,6 gegen ein Auseinanderklaffen zu sichern, ist im von der Fassadenvorderseite 12 abgewandten rückwärtigen Bereich eine Verbindungsvorrichtung 26 vorgesehen. Diese ist im Wesentlichen gebildet aus einer Schraube 28 mit einem Schraubenkopf 29 und einer Führungshülse 30. Die Schraube 28 ist am Riegelprofil 6 befestigt und ragt über deren Stirnseite 24 in axialer Richtung hinaus. Zu der Verbindungsvorrichtung gehörig ist weiterhin ein Lagerauge 32 in der Seitenwand 25 des Pfostenprofils 4. Wesentlich ist, dass die Führungshülse 30 in einer Montagerichtung 34 relativ zur Schraube 28 beweglich gelagert ist. Die Montagerichtung 34 ist definiert durch die Richtung von der Fassadenvorderseite 12 zu einer Rückwand 35A des Pfostenprofils 4. Sie verläuft zugleich radial zur Längsrichtung der Schraube 28. An einer Rückwand 35B des Riegelprofils 6 (Fig. 3) ist ein Befestigungselement 36 vorgesehen, an dem sich die Führungshülse 30 abstützt.

Bei der Montage wird nun derart vorgegangen, dass die bündig mit dem Schraubenkopf 29 ausgerichtete Führungshülse 30 in das Lagerauge 32 eingeführt und der Schraubenkopf 29 durch das Lagerauge 32 durchgeführt wird. Der Schraubenkopf 29 reicht also in den Hohlraum 10A des Pfostenprofils 4 hinein, während die Führungshülse 30 bündig im Lagerauge 32 einliegt. Im nächsten Schritt wird das Riegelprofil 6 in Montagerichtung 34 nach hinten verschoben, so dass der Schraubenkopf 29 relativ zum Lagerauge 32 verschoben wird und dadurch mit der Seitenwand 25 des Pfostenprofils 4 einen Hintergriff ausbildet. Dadurch ist eine in Längsrichtung des Pfostenprofils 4 wirkende Befestigung geschaffen. Die Verbindungsvorrichtung 26 ist also derart bemessen, dass im Montageendzustand die Schraube 28 mit ihrem Schraubenkopf 29 unmittelbar und weitgehend ohne Spiel an der Innenseite der Seitenwand 25 anliegt. Dadurch sind die Profile 4,6 fest aneinander gehalten. Dies ist insbesondere von Vorteil beim Transport von vorgefertigten Modulen.

Der entscheidende Vorteil der Verbindungsvorrichtung 26 mit der in Montagerichtung 34 verschieblich gelagerten Führungshülse 30 ist darin zu sehen, dass eventuell auftretende Verdrehkräfte von der passgenau im Lagerauge 32 einliegenden Führungshülse 30 mit aufgenommen werden. Durch den passgenauen Sitz verteilen sich die Kräfte über einen großen Umfangsbereich der Führungshülse 30, so dass diese weniger belastet wird. Ein weiterer wesentlicher Gesichtspunkt ist die Abstützung der Führungshülse 30 am Befestigungselement 36. Hierdurch werden zwischen den Profilen wirkende Quer- oder Scherkräfte von der Führungshülse 30 aufgenommen. Die Schraube 28 wird daher nicht oder nur kaum scherbeansprucht.

Das aus Fig. 3 zu entnehmende Riegelprofil 6 ist ähnlich wie das Pfostenprofil 4 aufgebaut, weist also ebenfalls einen in etwa rechteckförmigen Querschnitt auf, welcher einen Hohlraum 10B umschließt. An der Fassadenvorderseite 12B sind seitlich wiederum Dichtungsaufnahmenuten 16B angeordnet. Im Gegensatz zum Pfostenprofil 4 fehlen hier jedoch die Schraubkammem 14. Des Weiteren ist an der Fassadenvorderseite 12B ebenfalls ein Schraubkanal 18B angeordnet, der vergleichbar zu dem Schraubkanal 18A des Pfostenprofils 4 aufgebaut ist.

An der der Fassadenvorderseite 12B gegenüberliegenden Rückwand 35B ist an der zum Hohlraum 10B gewandten Innenseite das Befestigungselement 36 angeordnet, welches unmittelbar und einstückig mit der Rückwand 35B verbunden ist. Das Befestigungselement 36 weist zwei Schraubaugen 38 auf. Eines dieser beiden Schraubaugen 38 ist für die Aufnahme der Schraube 28 zur Ausbildung der Verbindungsvorrichtung 26 vorgesehen. Das weitere Schraubauge 38 kann für weitere Verbindungszwecke herangezogen werden. Die Position der Führungshülse 30 ist durch einen gestrichelten Kreis dargestellt.

Gemäß Fig. 7 weist die Schraube 28 den als Kragen wirkenden und flanschartig ausgebildeten Schraubenkopf 29 und einen sich daran anschließenden Positionierbund 42 mit verringertem Durchmesser auf. Der Schraubenkopf 29 und der Positionierbund 42 bildet einen Lagerschaft 44. Der Schraubenkopf 29 ist also an einem Freiende des Lagerschafts 44 angeordnet. An diesen Lagerschaft 44 schließt sich im vorderen Bereich ein Gewindeschaft 46 an.

Über den Positionierbund 42 wird die Führungshülse 30 geschoben, die in den Fig. 8 und 9 näher dargestellt ist. Die Höhe der Führungshülse H ist größer als die Länge L des Positionierbundes 42. Die Länge L entspricht dabei im Wesentlichen der Dicke D der Seitenwand 25. Im Montageendzustand steht die Führungshülse 30 daher aus dem Lagerauge 32 etwas hervor und reicht in den Hohlraum 10B des Riegelprofils 6 und stützt sich am Befestigungselement 36 ab. Die Führungshülse 30 weist ein Langloch 48 auf, wodurch eine radiale Beweglichkeit relativ zum Lagerschaft 44 im Bereich des Positionierbunds 42 ermöglicht ist.

An der dem Schraubenkopf 29 im Montageendzustand abgewandten Unterseite 50 der Führungshülse 30 ist als ein erstes Führungselement eine Aussparung nach Art einer Führungsnut 52 vorgesehen. Diese erstreckt sich an einer Seite bis zum Rand der Führungshülse 30 und ist auf der anderen Seite durch einen Anschlag 54 begrenzt. Die Führungsnut 52 ist also zu einer Seite hin offen und im Wesentlichen rechteckförmig ausgebildet. Auf der dem Schraubenkopf 29 zugewandten Oberseite 56 der Führungshülse 30 ist eine Mitnahmespitze 58 vorgesehen.

Bei der Befestigung der Schraube 28 am Befestigungselement 36 des Riegelprofils 6 greift das Befestigungselement 36 in die Führungsnut 52 ein. Das Befestigungselement 36 ist hierzu komplementär zu der Führungsnut 52 im Querschnitt gesehen ebenfalls rechteckförmig ausgebildet ist (vgl. Fig. 3) und weist eine zur Breite B1 der Führungsnut 52 komplementäre Breite B2 auf. Dadurch wirkt das Befestigungselement 36 als zweites und nach Art eines Stegs ausgebildetes Führungselement, so dass die Führungshülse 30 linear verschieblich ist. Durch das Zusammenwirken zwischen Führungsnut 52 der Führungshülse 30 und dem Befestigungselement 36 ist einerseits eine definierte Führung der Führungshülse 30 erreicht. Andererseits ist hierdurch ein formschlüssiges Abstützen der Führungshülse 30 am Riegelprofil 6 erzielt.

Beim Einschrauben der Schraube 28 wird ein Reibkontakt zwischen der Mitnahmespitze 58 und dem Schraubenkopf 29 ausgebildet, so dass eine Kraft auf die Führungshülse 30 ausgeübt wird. Dadurch wird diese entlang der Führungsnut 52 auf dem Befestigungselement 36 linear bis zum Anschlag 54 verschoben. Der Anschlag 54 ist dabei derart positioniert, dass in der durch ihn definierten Anschlagposition die Führungshülse 30 bündig mit dem Schraubenkopf 29 abschließt. Für die bündige Ausrichtung zwischen dem Schraubenkopf 29 und der Führungshülse 30 ist der Außendurchmesser A1 des Schraubenkopfes gleich dem Außendurchmesser A2 der Führungshülse 30. Durch die Reibverbindung zwischen der Mitnahmespitze 58 und dem Schraubenkopf 29 wird die Führungshülse 30 in dieser Anschlagposition gehalten. Dadurch wird eine einfache Montage erreicht, und der Schraubenkopf 29 kann problemlos durch das Lagerauge 32 hindurch und die Führungshülse 30 in das Lagerauge 32 eingeführt werden. Gleichzeitig ist die Reibverbindung zwischen Führungshülse 30 und dem Schraubenkopf 29 ausreichend klein, um das Riegelprofil 6 in Montagerichtung 34 verschieben zu können, um den Hintergriff zwischen dem Schraubenkopf 29 und der Seitenwand 25 auszubilden.

## Patentansprüche

1. Verbindungsvorrichtung (26) zwischen einem Pfostenprofil (4) und einem Riegelprofil (6) für eine Bauwerksfassade mit einem Lagerauge (32) am Pfostenprofil (4) und mit einem im Motageendzustand das Lagerauge (32) durchgreifenden Lagerschaft (44) am Riegelprofil (6),
**gekennzeichnet durch**
einen flanschartigen Kragen (29) am Freiende des Lagerschafts (44) zum Hintergreifen des Lagerauges (32) und **durch** eine im Montageendzustand im Lagerauge (32) einliegende Führungshülse (30), die am Lagerschaft (44) quer zu dessen Längsrichtung verschieblich gelagert ist.

2. Verbindungsvorrichtung (26) nach Anspruch 1,
**dadurch gekennzeichnet,**
**dass** der Außendurchmesser (A1) des Kragens (29) kleiner oder gleich dem Außendurchmesser (A2) der Führungshülse (30) ist.

3. Verbindungsvorrichtung (26) nach Anspruch 1 oder 2,
**dadurch gekennzeichnet,**
**dass** die Führungshülse (30) im Montageendzustand passgenau im Lagerauge (32) einliegt.

4. Verbindungsvorrichtung (26) nach einem der vorhergehenden Ansprüche,
**dadurch gekennzeichnet,**
**dass** der Lagerschaft (44) einen sich an den Kragen (29) anschließenden Positionierbund (42) aufweist, auf den die Führungshülse (30) aufschiebbar ist.

5. Verbindungsvorrichtung (26) nach einem der vorhergehenden Ansprüche,
**dadurch gekennzeichnet,**
**dass** am Riegelprofil (4) ein Befestigungselement (36) angeordnet ist, an dem die Führungshülse (30) im Montageendzustand abgestützt ist.

6. Verbindungsvorrichtung (26) nach einem der vorhergehenden Ansprüche,
**dadurch gekennzeichnet,**
**dass** eine Schraube (28) vorgesehen ist, deren Schraubenkopf (29) als Kragen dient.

7. Verbindungsvorrichtung (26) nach Anspruch 6,
**dadurch gekennzeichnet,**
**dass** die Schraube (28) in das Befestigungselement (36) eingeschraubt ist.

8. Verbindungsvorrichtung (26) nach Anspruch 7,
**dadurch gekennzeichnet,**
**dass** das Befestigungselement (36) zumindest ein Schraubauge (38) aufweist.

9. Verbindungsvorrichtung (26) nach Anspruch 7 oder 8,
**dadurch gekennzeichnet,**
**dass** an der dem Kragen (29) abgewandten Unterseite (50) der Führungshülse (30) ein erstes Führungselement (52) und am Befestigungselement (36) ein hierzu korrespondierendes zweites Führungselement vorgesehen sind, derart, dass die Führungshülse (30) radial zum Lagerschaft (44) verschieblich geführt ist.

10. Verbindungsvorrichtung (26) nach Anspruch 9,
**dadurch gekennzeichnet,**
**dass** die Führungshülse (30) bis zu einem Anschlag (54) verschieblich gelagert und in der Anschlagposition konzentrisch zum Lagerschaft (44) angeordnet ist.

11. Verbindungsvorrichtung (26) nach Anspruch 10,
**dadurch gekennzeichnet,**
**dass** das erste Führungselement (52) nach Art einer Nut und das zweite Führungselement nach Art eines Stegs ausgebildet sind, und dass der Anschlag (54) durch eine Begrenzung der Nut gebildet ist.

12. Verbindungsvorrichtung (26) nach einem der Ansprüche 8 bis 10,
**dadurch gekennzeichnet,**
**dass** zur Verschiebung der Führungshülse (30) an der dem Kragen (29) zugewandten Oberseite (56) der Führungshülse (30) ein Mitnahmeelement (58) vorgesehen ist, das beim Montagevorgang mit dem Kragen (29) in Wirkverbindung steht.

## Claims

1. Connecting device (26) between a mullion profile (4) and a transom profile (6) for a building façade, comprising a bearing eye (32) on the mullion profile (4) and a bearing shaft (44) on the transom profile (6) passing through the bearing eye (32) in the final assembled state, **characterized by** a flange-like collar (29) on the free end of the bearing shaft (44) for gripping behind the bearing eye (32) and by a guide sleeve (30) which lies in the bearing eye (32) in the final assembled state and is mounted on the bearing shaft (44) so as to be displaceable transversely to its longitudinal direction.

2. Connecting device (26) according to Claim 1, **characterized in that** the outside diameter (A1) of the collar (29) is less than or equal to the outside diameter (A2) of the guide sleeve (30).

3. Connecting device (26) according to Claim 1 or 2, **characterized in that** the guide sleeve (30) lies with an accurate fit in the bearing eye (32) in the final assembled state.

4. Connecting device (26) according to one of the preceding claims, **characterized in that** the bearing shaft (44) has, adjoining the collar (29), a positioning neck (42) onto which the guide sleeve (30) can be pushed.

5. Connecting device (26) according to one of the preceding claims, **characterized in that** a fastening element (36) on which the guide sleeve (30) is supported in the final assembled state is arranged on the transom profile (6).

6. Connecting device (26) according to one of the preceding claims, **characterized in that** a screw (28) whose screw head (29) serves as a collar is provided.

7. Connecting device (26) according to Claim 6, **characterized in that** the screw (28) is screwed into the fastening element (36).

8. Connecting device (26) according to Claim 7, **characterized in that** the fastening element (36) has at least one screw eye (38).

9. Connecting device (26) according to Claim 7 or 8, **characterized in that** a first guide element (52) is provided on the underside (50), which faces away from the collar (29), of the guide sleeve (30) and a second guide element, which corresponds to the first, is provided on the fastening element (36), in such a way that the guide sleeve (30) is guided displaceably radially to the bearing shaft (44).

10. Connecting device (26) according to Claim 9, **characterized in that** the guide sleeve (30) is mounted so as to be displaceable as far as a limit stop (54) and is arranged concentrically to the bearing shaft (44) in the limit stop position.

11. Connecting device (26) according to Claim 10, **characterized in that** the first guide element (52) is designed in the manner of a groove and the second guide element is designed in the manner of a web, and **in that** the limit stop (54) is formed by a groove boundary.

12. Connecting device (26) according to one of Claims 8 to 10, **characterized in that**, in order to displace the guide sleeve (30), a driving element (58) is provided on the upper side (56), which faces the collar (29), of the guide sleeve (30) and is actively connected to the collar (29) during the assembly operation.

## Revendications

1. Dispositif de liaison (26) entre un montant profilé (4) et une traverse profilée (6) pour une façade de bâtiment, comportant un orifice de jonction (32) sur le montant profilé (4) et un tenon d'assemblage (44) sur la traverse profilée (6), lequel passe à travers l'orifice de jonction (32) en position de montage final,
**caractérisé par**
une collerette (29) en forme de bride sur l'extrémité libre du tenon d'assemblage (44), laquelle est destinée à être reçue derrière l'orifice de jonction (32), et par une douille de guidage (30), qui est insérée dans l'orifice de jonction (32) dans la position de montage final et qui est montée mobile sur le tenon d'assemblage (44) perpendiculairement à sa direction longitudinale.

2. Dispositif de liaison (26) selon la revendication 1,
**caractérisé en ce que**
le diamètre extérieur (A1) de la collerette (29) est inférieur ou égal au diamètre extérieur (A2) de la douille de guidage (30).

3. Dispositif de liaison (26) selon la revendication 1 ou 2,
**caractérisé en ce que**
la douille de guidage (30), dans la position de montage final, est insérée avec une précision d'ajustage dans l'orifice de jonction (32).

4. Dispositif de liaison (26) selon l'une quelconque des revendications précédentes,
**caractérisé en ce que**
le tenon d'assemblage (44) comporte une bride de positionnement (42), qui est adjacente à la collerette (29) et sur laquelle la douille de guidage (30) peut être emmanchée.

5. Dispositif de liaison (26) selon l'une quelconque des revendications précédentes,
**caractérisé en ce que**
sur le montant profilé (4) est agencé un élément de fixation (36), sur lequel la douille de guidage (30) prend appui dans la position de montage final.

6. Dispositif de liaison (26) selon l'une quelconque des revendications précédentes,
**caractérisé en ce que**
une vis (28) est prévue, dont la tête (29) fait fonction de collerette.

7. Dispositif de liaison (26) selon la revendication 6, **caractérisé en ce que** la vis (28) est vissée dans l'élément de fixation (36).

8. Dispositif de liaison (26) selon la revendication 7,
**caractérisé en ce que**
l'élément de fixation (36) comporte au moins un orifice pour vis (38) .

9. Dispositif de liaison (26) selon la revendication 7 ou 8,
**caractérisé en ce que**
sur la face inférieure (50) de la douille de guidage (30), opposée à la collerette (29), est prévu un premier élément de guidage (52), et un deuxième élément de guidage correspondant à celui-ci est prévu sur l'élément de fixation (36) de telle sorte que la douille de guidage (30) est montée mobile dans le sens radial par rapport au tenon d'assemblage (44).

10. Dispositif de liaison (26) selon la revendication 9,
**caractérisé en ce que**
la douille de guidage (30) est montée mobile jusqu'à une butée (54) et, dans la position de butée, est agencée concentriquement au tenon d'assemblage (44).

11. Dispositif de liaison (26) selon la revendication 10,
**caractérisé en ce que**
le premier élément de guidage (52) est conçu sous forme de rainure et le deuxième élément de guidage est conçu sous forme de nervure, et **en ce que** la butée (54) est formée par une paroi de la rainure.

12. Dispositif de liaison (26) selon l'une quelconque des revendications 8 à 10,
**caractérisé en ce que**,
pour le coulissement de la douille de guidage (30), un élément d'entraînement (58) qui, dans la position de montage, est en liaison active avec la collerette (29), est prévu sur la face supérieure (56), orientée vers la collerette (29), de la douille de guidage (30).
